(19) **Europäisches Patentamt**
**European Patent Office**
**Office européen des brevets**

(11) **EP 1 203 978 B1**

(12) **FASCICULE DE BREVET EUROPEEN**

(45) Date de publication et mention
de la délivrance du brevet:
**19.12.2007 Bulletin 2007/51**

(51) Int Cl.:
***G02B 27/64*** *(2006.01)* ***F41G 7/22*** *(2006.01)*

(21) Numéro de dépôt: **01402747.8**

(22) Date de dépôt: **23.10.2001**

(54) **Equipment optique destiné à être aéroportés**

Optisches Gerät für Flugkörper

Optical equipment to be airborne

(84) Etats contractants désignés:
**DE ES GB IT SE**

(30) Priorité: **24.10.2000 FR 0013631**

(43) Date de publication de la demande:
**08.05.2002 Bulletin 2002/19**

(73) Titulaire: **Thales**
**75008 Paris (FR)**

(72) Inventeurs:
• **Pepin, Christian,**
**Thales Intellectual Property**
**94117 Arcueil Cedex (FR)**

• **Rollin, Joel,**
**Thales Intellectual Property**
**94117 Arcueil Cedex (FR)**

(74) Mandataire: **Vigand, Régis Louis Michel**
**Marks & Clerk France**
**31-33 Avenue Aristide Briand**
**94117 Arcueil Cedex (FR)**

(56) Documents cités:
**US-A- 3 995 933 US-A- 6 091 548**
**US-A- 6 108 133**

## Description

L'invention concerne le domaine des équipements optiques destinés à être aéroportés. Un équipement optique comporte un sous-ensemble optique ayant une ligne de visée, par exemple un capteur de lumière ou un émetteur de lumière. Le sous-ensemble optique est protégé de l'environnement extérieur par une enveloppe extérieure. L'enveloppe extérieure comporte un capot suiveur mobile et au moins un hublot transparent dans un domaine spectral optique donné. Le hublot est solidaire du capot suiveur et fixe par rapport au capot suiveur. Le hublot permet une communication optique entre le sous-ensemble optique et l'extérieur. Le capot suiveur mobile permet au hublot, et à la ligne de visée du sous-ensemble optique dont le déplacement est harmonisé avec celui du hublot, de se déplacer dans un domaine angulaire important de l'espace extérieur, par exemple en effectuant un balayage dans une portion d'un espace d'observation pendant le vol de l'aéronef. Généralement, le sous-ensemble optique est isolé de sa structure porteuse par une suspension antivibratoire filtrant les contraintes mécaniques.

Selon un art antérieur, il est connu d'utiliser un hublot plan parce que les mouvements résiduels relatifs entre le hublot et le sous-ensemble optique sont moins gênants avec un hublot plan qu'avec un hublot non-plan comme par exemple un hublot sphérique.

En conditions opérationnelles, l'équipement optique est intégré à un aéronef. La ligne de visée du sous-ensemble optique doit pouvoir être orientée dans un domaine angulaire important, notamment dans le cas où l'équipement optique a sensiblement une forme de boule et où le capot suiveur a une forme sphérique. Le hublot plan porté par le capot suiveur est alors amené à prendre des positions à forte incidence par rapport à la direction de déplacement de l'aéronef auquel l'équipement optique est intégré, c'est-à-dire que la normale extérieure au hublot peut faire un angle important avec la direction de déplacement dudit aéronef en particulier lorsque le sous-ensemble optique et donc aussi le hublot « regardent » vers l'arrière dudit aéronef. L'écoulement aérodynamique au niveau du hublot, c'est-à-dire les écoulements d'air devant le hublot, est alors très perturbé, il est en fait turbulent. En effet, les arêtes à l'interface existant entre le plan du hublot et la portion de sphère du capot suiveur génèrent des amorces de turbulences rendant turbulent l'écoulement aérodynamique au niveau du hublot. Cet écoulement turbulent devant la pupille d'entrée du sous-ensemble optique entraîne par exemple des pertes de résolution au niveau du sous-ensemble optique qui sont gênantes, notamment lorsque le sous-ensemble optique fonctionne dans un domaine spectral optique de courtes longueurs d'onde, par exemple le visible ou le proche infrarouge.

L'invention est basée sur l'utilisation, dans l'équipement optique, d'un hublot dont la surface extérieure sphérique présente une continuité de forme avec la surface extérieure du capot suiveur. Cette continuité de forme est suffisante pour ne pas augmenter substantiellement les perturbations de l'écoulement aérodynamique au niveau du hublot. Une augmentation des perturbations devient substantielle lorsque, pour l'application envisagée, cette augmentation des perturbations dégrade de manière significative le fonctionnement de l'équipement optique selon l'invention. Afin de diminuer fortement voire d'éliminer la gêne que constituent les mouvements résiduels relatifs entre le hublot et le sous-ensemble optique, le hublot est rendu afocal.

Selon l'invention d'après la revendication 1, il est prévu un équipement optique destiné à être aéroporté comportant un sous-ensemble optique protégé par un capot suiveur mobile et par un hublot solidaire du capot suiveur et fixe par rapport au capot suiveur, caractérisé en ce que le hublot est afocal, en ce que la surface extérieure du hublot est sphérique, en ce que la ligne de visée du sous-ensemble optique passe par le centre de courbure de la surface extérieure du hublot, et en ce que la surface extérieure du hublot présente avec la surface extérieure du capot suiveur une continuité de forme.

Selon l'invention, il est également prévu un équipement optique destiné à être aéroporté comportant une structure porteuse, un sous-ensemble optique ayant une ligne de visée et étant à la fois suspendu à la structure porteuse et mécaniquement isolé de la structure porteuse par une suspension antivibratoire filtrant les contraintes mécaniques, une enveloppe extérieure protégeant le sous-ensemble optique de l'environnement extérieur, l'enveloppe extérieure comportant un capot suiveur mobile par rapport à la structure porteuse et un hublot lequel permet une communication optique dans un domaine spectral donné entre le sous-ensemble optique et l'extérieur, le hublot étant entouré par le capot suiveur et fixe par rapport au capot suiveur, caractérisé en ce que la surface extérieure du hublot est sphérique, en ce que la ligne de visée du sous-ensemble optique passe par le centre de courbure de la surface extérieure du hublot en l'absence de contraintes mécaniques exercées sur la structure porteuse, en ce que la surface extérieure du hublot et la surface extérieure du capot suiveur présentent une continuité de forme entre elles au niveau de leur jonction de manière à ne pas augmenter substantiellement les perturbations d'écoulement aérodynamique au niveau du hublot quelle que soit la position relative du capot suiveur et de la structure porteuse, et en ce que le hublot comporte un ou plusieurs dioptres internes fixes par rapport à la surface extérieure du hublot, ledit ou lesdits dioptres internes rendant le hublot afocal.

L'invention sera mieux comprise et d'autres particularités et avantages apparaîtront à l'aide de la description ci-après et des dessins joints, donnés à titre d'exemples, où :

- la figure 1 représente schématiquement la déviation de faisceaux lumineux inclinés lors de la traversée du hublot appartenant à un équipement optique selon l'invention ;
- la figure 2 représente schématiquement la vue en coupe d'un premier mode de réalisation préférentiel d'un équipement optique selon l'invention ;
- la figure 3 représente schématiquement la vue en coupe d'un deuxième mode de réalisation d'un équipement optique selon l'invention.

L'invention concerne un équipement optique destiné à être aéroporté. Un équipement optique destiné à être aéroporté est un équipement destiné à être intégré dans un aéronef. L'équipement optique comporte un sous-ensemble optique ayant une ligne de visée. Le sous-ensemble optique ayant une ligne de visée est par exemple soit un ou plusieurs capteurs de lumière soit un ou plusieurs émetteurs de lumière soit un dispositif regroupant à la fois un ou plusieurs émetteurs de lumière et un ou plusieurs capteurs de lumière.

L'équipement optique comporte une structure porteuse. Le sous-ensemble optique est suspendu à la structure porteuse. Le sous-ensemble optique est en même temps mécaniquement isolé de la structure porteuse par une suspension antivibratoire filtrant les contraintes mécaniques. Les contraintes mécaniques sont par exemple des vibrations, des chocs, des accélérations. Une ambiance vibratoire importante risque de générer du flou par exemple au niveau des images fournies par le capteur de lumière lorsque le sous-ensemble optique comporte un capteur de lumière. La suspension antivibratoire comporte par exemple d'une part une boucle de stabilisation gyroscopique pour filtrer les contraintes mécaniques à basse fréquence et d'autre part des blocs élastomères pour filtrer les contraintes mécaniques à haute fréquence, la haute fréquence comprenant préférentiellement les fréquences supérieures à quelques dizaines de Hertz, typiquement supérieures à 30 Hertz.

Le sous-ensemble optique est protégé de l'environnement extérieur par une enveloppe extérieure. L'enveloppe extérieure est préférentiellement étanche, garantissant une atmosphère sèche et avantageusement une température contrôlée. L'enveloppe extérieure comporte un capot suiveur mobile par rapport à la structure porteuse et un hublot qui permet une communication optique dans un domaine spectral donné entre le sous-ensemble optique et l'extérieur. Le domaine spectral donné est un domaine spectral optique qui comprend une ou plusieurs raies et/ou un ou plusieurs bandes spectrales dans un domaine s'étendant de l'ultraviolet à l'infrarouge lointain. Le hublot est entouré par le capot suiveur et fixe par rapport au capot suiveur. Le capot suiveur mobile permet au hublot, ainsi qu'à la ligne de visée du sous-ensemble optique qui est de préférence stabilisée et dont le déplacement est harmonisé avec celui du hublot, de se déplacer dans un domaine angulaire important de l'espace extérieur, par exemple en effectuant un balayage dans une portion d'un espace d'observation donné, pendant le vol de l'aéronef, par exemple dans le cas où le sous-ensemble optique comprend au moins un capteur de lumière. Dans le cas préférentiel où le hublot présente une symétrie de révolution, la ligne de visée du sous-ensemble optique et l'axe de révolution du hublot sont harmonisés, l'un des deux étant généralement asservi à l'autre. Au moins la partie utile du hublot, c'est-à-dire la partie du hublot par laquelle passe l'information lumineuse utile circulant entre le sous-ensemble optique et l'extérieur, présente généralement une symétrie de révolution.

La surface extérieure du hublot est sphérique, c'est-à-dire que cette surface est une portion de sphère. La ligne de visée du sous-ensemble optique passe par le centre de courbure de la surface extérieure sphérique du hublot, lorsque le sous-ensemble optique est dans sa position d'équilibre c'est-à-dire en l'absence de contraintes mécaniques exercées sur la structure porteuse. En fait, lors du vol de l'aéronef, en conditions opérationnelles, la ligne de visée passera dans le voisinage de ce centre de courbure, par exemple en vibrant ou en oscillant autour de ce centre de courbure.

La surface extérieure du hublot et la surface extérieure du capot suiveur présentent une continuité de forme entre elles au niveau de leur jonction de manière à ne pas augmenter substantiellement les perturbations d'écoulement aérodynamique au niveau du hublot, et ceci quelle que soit la position relative du capot suiveur et de la structure porteuse, c'est-à-dire quelle que soit la position que le capot suiveur peut être amené à prendre par rapport à la structure porteuse lors du déplacement de ce capot suiveur. Les perturbations d'écoulement aérodynamique au niveau du hublot, c'est-à-dire à l'extérieur de l'équipement optique et au voisinage du hublot, en fait devant le hublot, sont en effet très gênantes car elles se situent sur le chemin de la ligne de visée du sous-ensemble optique.

Le hublot comporte un ou plusieurs dioptres internes fixes par rapport à la surface extérieure du hublot. Ce ou ces dioptres internes rendent le hublot afocal, c'est-à-dire que leurs caractéristiques comme par exemple matériaux constitutifs et dimensions géométriques sont choisis de manière à ce que le hublot considéré globalement, c'est-à-dire comme élément optique allant de sa surface extérieure sphérique à sa surface la plus intérieure, soit afocal, c'est-à-dire que tout faisceau lumineux collimaté d'un côté du hublot soit encore collimaté de l'autre côté du hublot après avoir traversé le hublot. Avec un hublot afocal, les mouvements de translation relatifs entre le hublot et le sous-ensemble optique ne sont plus gênants, tandis que les mouvements de rotation relatifs entre le hublot et le sous-ensemble optique entraînent encore une légère déviation parasite dont l'amplitude dépend du grossissement que présente le hublot afocal.

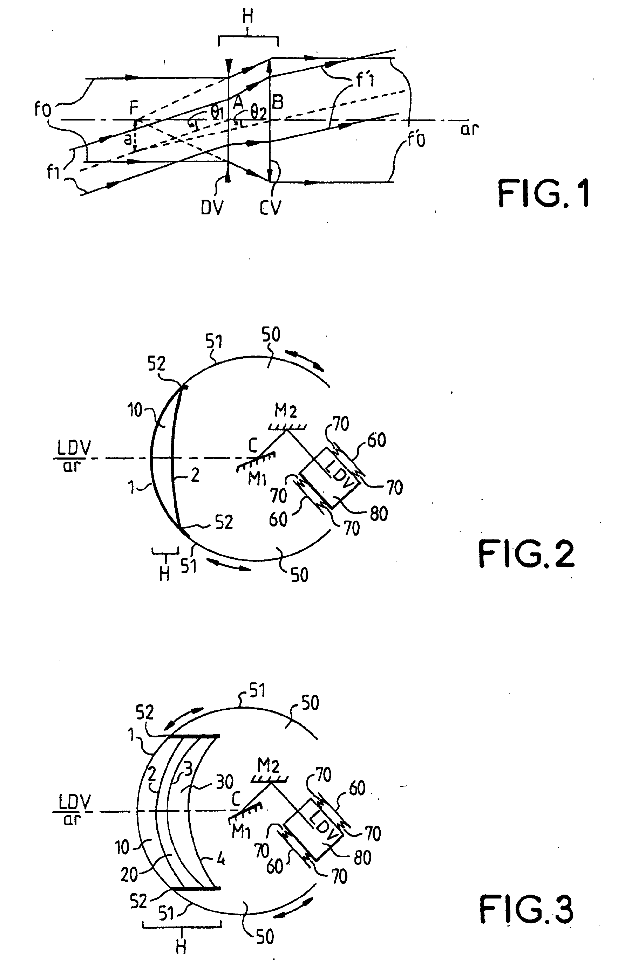

La figure 1 représente schématiquement la déviation de faisceaux lumineux inclinés lors de la traversée du hublot appartenant à un équipement optique selon l'invention. Considérons un hublot H globalement afocal et présentant une symétrie de révolution autour d'un axe de révolution ar représenté en traits mixtes sur la figure 1. Le hublot H peut se décomposer fonctionnellement en une lentille divergente DV située du côté extérieur du hublot H car englobant la surface extérieure sphérique du hublot H et en une lentille convergente CV située du côté intérieur du hublot H. Les deux lentilles DV et CV ont même axe de symétrie ar et même foyer F. Soient A le centre de la lentille divergente DV et B le centre de la lentille convergente CV. Soit le faisceau lumineux $f_0$ arrivant de l'extérieur selon une direction parallèle à l'axe de symétrie ar des lentilles DV et CV. Le sens de propagation des faisceaux lumineux est représenté par des flèches sur la figure 1. Après traversée des deux lentilles DV et CV, le faisceau lumineux $f_0$ est devenu le faisceau lumineux $f_0'$ qui est toujours parallèle à l'axe de symétrie ar. Par contre un faisceau lumineux $f_1$ arrivant de l'extérieur et dont la direction représentée en traits pointillés sur la figure 1 fait un angle $\theta_1$ non nul avec l'axe de symétrie ar, devient, après traversée des lentilles DV et CV, un faisceau lumineux $f_1'$ dont la direction fait un angle $\theta_2$ avec l'axe de symétrie ar, l'angle $\theta_2$ étant différent de l'angle $\theta_1$. La déviation $\alpha$ subie par le faisceau lumineux $f_1$ lors de la traversée des deux lentilles DV et CV c'est-à-dire lors de la traversée du hublot H, vaut $\theta_1-\theta_2$. Soit a la valeur de la perpendiculaire abaissée de la direction du faisceau lumineux $f_1$ sur l'axe de symétrie ar au niveau du foyer F. Soient $F_1$ la valeur de la longueur du segment AF et $F_2$ la valeur de la longueur du segment BF. Soit G le grossissement du hublot afocal H, G vaut $F_1/F_2$. On a $\tan\theta_1=a/F_1$ et $\tan\theta_2=a/F_2$. Pour des petits angles, on peut faire les approximations suivantes : $\tan\theta_1=\theta_1$ et $\tan\theta_2=\theta_2$. On obtient alors $\alpha=a/F_1-a/F_2$ c'est-à-dire, compte tenu de la valeur du grossissement G du hublot afocal H, $\alpha=\theta_1(1-G)$. Ainsi, pour un mouvement de rotation parasite, relatif entre le hublot H et le sous-ensemble optique, correspondant à un angle $\theta_1$, un faisceau lumineux donné sera dévié d'un angle valant $\alpha=\theta_1(1-G)$.

Par conséquent, pour diminuer l'effet des mouvements de rotation parasite relatifs entre le hublot afocal et le sous-ensemble optique, plus précisément entre l'axe de symétrie de révolution du hublot et la ligne de visée du sous-ensemble optique, il est intéressant de rendre le grossissement G le plus proche possible de 1. Il existe plusieurs façons, éventuellement combinables entre elles, de rendre le grossissement d'un hublot plus proche de 1. Par exemple, augmenter le rayon de courbure de la surface extérieure du hublot, choisir comme matériau constitutif du hublot un matériau d'indice plus faible, diminuer l'épaisseur du hublot tout en respectant l'épaisseur minimum qu'imposent les contraintes mécaniques qu'aura à subir le hublot en conditions opérationnelles pendant le vol de l'aéronef.

Des exemples de grossissement G obtenu sont donnés dans la suite de la description, au niveau d'exemples numériques décrits ultérieurement. Le grossissement G de l'afocal est de préférence suffisamment proche de 1 pour que, compte tenu de la valeur maximale de l'amplitude des mouvements de rotation relatifs entre l'axe de symétrie de révolution du hublot et la ligne de visée du sous-ensemble optique, la déviation parasite d'un faisceau lumineux traversant le hublot soit suffisamment faible pour ne pas perturber de manière substantielle le fonctionnement de l'équipement optique selon l'invention. Par exemple, si le sous-ensemble optique est une caméra comportant une matrice de détecteurs élémentaires ayant un pas donné, la valeur du grossissement G du hublot afocal sera avantageusement choisie de manière à ce que la déviation parasite résultante du faisceau lumineux au niveau de la caméra n'excède pas la moitié du pas des détecteurs élémentaires de la matrice. Le grossissement G est choisi de préférence le plus proche possible de 1. De préférence, le grossissement G du hublot afocal est compris entre 0,95 et 1. Un grossissement G dont la valeur n'est pas assez proche de 1, nécessitera souvent une correction supplémentaire par exemple de nature électronique dans la partie traitement électronique alors associée au sous-ensemble optique.

Dans le cas où l'équipement optique comporte au moins deux voies optiques ayant des pupilles d'entrée séparées, les deux voies optiques passent préférentiellement soit à travers le même hublot soit à travers deux hublots distincts mais de même grossissement. Lorsque la ligne de visée du sous-ensemble optique est angulairement décalée avec le capot suiveur, c'est-à-dire avec l'axe de symétrie de révolution du ou des hublots, une désharmonisation entre les voies optiques est ainsi évitée.

Dans le cas où par exemple le sous-ensemble optique comporte un dispositif d'imagerie, il existe de préférence des moyens de correction électronique associés ou intégrés au sous-ensemble optique permettant de corriger électroniquement les images. Ces moyens de correction électronique compensent l'écart entre l'axe de révolution du hublot et la ligne de visée du sous-ensemble optique. En effet, la déviation parasite du faisceau lumineux traversant le hublot afocal se traduit par une translation, sur le capteur du dispositif d'imagerie qui est par exemple une caméra, de l'image représentant une portion de l'espace d'observation. Or, cette translation dépend de la valeur de l'écart angulaire entre l'axe de symétrie de révolution du hublot et la ligne de visée du dispositif d'imagerie. La valeur de cet écart angulaire peut être connue et est même mesurable en temps réel par l'intermédiaire de la mesure des positions angulaires respectives d'une part de la ligne de visée du dispositif d'imagerie et d'autre part du capot suiveur. La correction électronique des images du capteur est possible en temps réel à condition que la fréquence des oscillations parasites causant la déviation parasite des faisceaux lumineux traversant le hublot soit suffisamment faible devant l'inverse du temps d'intégration du capteur du dispositif d'imagerie. Par exemple, dans le cas d'une caméra numérique, la correction peut se réduire à un changement d'adresse sur une image numérisée.

Le hublot afocal a une surface extérieure qui est sphérique. Si le hublot est un hublot monoélément, c'est-à-dire constitué d'un seul ménisque, la surface intérieure du hublot ne peut pas être une simple surface sphérique concentrique à la surface extérieure, car alors le hublot serait divergent au lieu d'être afocal. La surface intérieure du hublot qui est alors le seul dioptre interne du hublot est de préférence sphérique non concentrique à la surface extérieure et/ou asphérique et/ou diffractive c'est-à-dire comportant au moins un réseau. Une surface intérieure asphérique et/ou diffractive permet également de corriger ou de mieux corriger certains défauts optiques de l'équipement optique selon l'invention. Une surface intérieure diffractive permet par exemple d'inclure des corrections chromatiques dans le hublot. Si le hublot est un hublot biélément, c'est-à-dire constitué de deux ménisques, les dioptres internes au nombre de trois ne peuvent pas tous être de simples surfaces sphériques concentriques à la surface extérieure, car alors le hublot serait divergent au lieu d'être afocal. Tout ou partie de ces dioptres internes est de préférence sphérique non concentrique à la surface extérieure et/ou asphérique et/ou diffractive, selon le type d'équipement optique considéré. Le hublot peut aussi être multiélément et comporter alors plus de trois dioptres internes.

Dans un premier mode de réalisation préférentiel, le hublot est monoélément, le hublot est donc constitué d'un seul ménisque. La surface extérieure du hublot est sphérique, donc possède une puissance optique qui est divergente. Le seul dioptre interne du hublot qui est la surface intérieure du hublot, possède alors une puissance optique qui est convergente de manière à rendre le hublot afocal. Avec un hublot biélément, il est possible d'obtenir un grossissement plus proche de 1 qu'avec un hublot monoélément. Cependant, dès que l'on s'écarte de l'axe de symétrie de révolution, le hublot biélément présente une rupture de symétrie plus importante que le hublot monoélément, et par conséquent les aberrations et les défauts de chromatisme sont plus difficiles à corriger avec le hublot biélément qu'avec le hublot monoélément. Toutefois, puisque avec le hublot monoélément, les lentilles fonctionnelles divergente et convergente constituant le hublot globalement afocal peuvent être amenées très proches l'une de l'autre, le grossissement du hublot afocal ainsi obtenu peut être alors rendu suffisamment proche de 1. C'est pourquoi, le hublot monoélément est préféré au hublot biélément.

La figure 2 représente schématiquement la vue en coupe d'un exemple d'équipement optique selon l'invention comportant un hublot monoélément. Pour des raisons de clarté de la figure 2, aucune hachure n'est représentée. L'unique ménisque 10 constituant le hublot afocal H a une surface extérieure 1 qui est sphérique et une surface intérieure 2 qui est par exemple sphérique non concentrique à la surface extérieure 1. Le hublot H présente un axe de symétrie de révolution ar. Le hublot H est intégré à un capot suiveur 50 dont la surface extérieure 51 présente une continuité de forme avec la surface extérieure 1 du hublot H au niveau de leur jonction 52. Le capot suiveur 50 a de préférence une forme sphérique qui lui permet de couvrir un large champ angulaire dans l'espace. Le capot suiveur est mobile en rotation autour de son centre C qui est aussi le centre de courbure du hublot H. Un sous-ensemble optique 80 est suspendu à une structure porteuse 60 par une suspension antivibratoire 70 laquelle isole mécaniquement le sous-ensemble optique 80 en filtrant les contraintes mécaniques en provenance de la structure porteuse 60. Le sous-ensemble optique 80 a une ligne de visée LDV dont l'harmonisation avec l'axe de symétrie de révolution ar est assurée par exemple par l'intermédiaire de deux miroirs $M_1$ et $M_2$, le miroir $M_2$ étant une partie fixe du sous-ensemble optique 80 tandis que le miroir $M_1$, qui est également monté sur le sous-ensemble optique 80, est mobile en rotation autour du centre C de courbure de la surface extérieure 1 du hublot H, c'est-à-dire plus précisément autour d'un axe passant par le centre C de courbure de la surface extérieure 1 du hublot H en l'absence de contraintes mécaniques exercées sur la structure porteuse 60. Le sous-ensemble optique 80 peut être situé en partie à l'extérieur de la boule formée par le capot suiveur 50 de surface extérieure 51 sphérique.

Dans le cas où le domaine spectral de sensibilité du sous-ensemble optique 80 est soit une raie laser soit une bande spectrale étroite comme par exemple la bande visible ou la bande proche infrarouge, la surface intérieure 2 du ménisque consiste préférentiellement en un dioptre qui est d'une part sphérique non concentrique avec la surface extérieure 1 du hublot H et d'autre part diffractif. Un dioptre est rendu diffractif par exemple par adjonction d'un hologramme.

Dans le cas où le dioptre le plus interne 2 du hublot H, c'est-à-dire la surface intérieure du hublot H, est sphérique non concentrique à la surface extérieure 1 du hublot H, soient $R_2$ le rayon de courbure du dioptre 2 le plus interne du hublot H, $R_1$ le rayon de courbure de la surface extérieure 1 du hublot H, e l'épaisseur du hublot H au niveau de son centre, c'est-à-dire au niveau de l'axe ar de symétrie de révolution, N l'indice du matériau constituant le ménisque 10, la relation suivante est sensiblement vérifiée : $R_2 = R_1 - e + \dfrac{e}{N}$, afin de rendre le hublot H afocal.

Considérons un exemple numérique. Le rayon de courbure $R_1$ est choisi égal à 200mm. Le rayon de courbure $R_2$ vaudra 180+20/N pour e=20mm et 190 +10/N pour e=10mm, avec N l'indice du matériau constituant le ménisque 10, pour satisfaire à la relation précédente. Les différents matériaux utilisables sont par exemple : le saphir ayant un indice valant N=1,7 ; le ZnS ayant un indice valant N=2,2 ; le Silicium ayant un indice valant N=3,4. Les valeurs de grossissement G du hublot afocal obtenu sont données dans le tableau suivant, pour deux valeurs d'épaisseur e valant 20mm et 10mm :

| Epaisseur e Indice N | 20mm | 10mm |
|---|---|---|
| 1,7 | G=0,96 | G=0,98 |
| 2,2 | G=0,95 | G=0,97 |
| 3,4 | G=0,93 | G=0,96 |

La valeur du grossissement G a été obtenue par la formule suivante $G = 1 - \dfrac{e(N-1)}{NR_1}$ . Le matériau préféré est le saphir dont l'indice N=1,7 est le plus faible des trois matériaux considérés ; de plus le saphir est un matériau très dur offrant une bonne résistance aux contraintes mécaniques, le saphir est également sensiblement transparent dans une large bande spectrale. Une épaisseur e plus faible permet une amélioration sensible des performances. En effet, en reprenant la formule donnant la déviation parasite $\alpha$ des faisceaux lumineux arrivant sous incidence $\theta_1$ non nulle après traversée du hublot afocal de grossissement G, à savoir $\alpha = \theta_1$ (1-G), on constate qu'une épaisseur deux fois plus faible (e valant 10mm au lieu de valoir 20mm) permet de réduire la déviation parasite $\alpha$ d'un facteur proche de 2, ce qui est très intéressant ; néanmoins la réduction de l'épaisseur e est limitée par une épaisseur minimum nécessaire pour que le hublot résiste aux contraintes mécaniques auxquelles il sera soumis en conditions opérationnelles pendant le vol de l'aéronef porteur.

Examinons les performances de cet exemple numérique en considérant l'écart aberrant $\Delta$ lié au chromatisme qui vaut : $\Delta = \dfrac{\Phi^2}{8.X}$ , avec $\Phi$ le diamètre de la pupille d'entrée du sous-ensemble optique, X le tirage image en présence d'une dérive d'indice relative valant 1%. Le tableau suivant donne, en fonction de l'indice N et de l'épaisseur e, les valeurs de l'écart aberrant $\Delta$ en $\mu$m :

| Indice N Epaisseur e | 1,7 | 2,2 |
|---|---|---|
| 10mm | $\Delta$=5,2$\mu$m | $\Delta$=6,9$\mu$m |
| 20mm | $\Delta$=10,5$\mu$m | $\Delta$=13,8$\mu$m |

Le cas d'un hublot en saphir ayant une épaisseur e valant 10mm correspond à l'écart aberrant le plus faible, et donc au meilleur résultat.

Dans un deuxième mode de réalisation, le hublot est biélément, le hublot est donc constitué de deux ménisques. Le hublot est constitué d'un ménisque divergent disposé vers l'extérieur du hublot et d'un ménisque convergent disposé vers l'intérieur du hublot, les deux ménisques étant séparés par une lame d'air ou par une couche de colle. Avec le hublot biélément, il est possible d'obtenir un grossissement plus proche de 1 qu'avec le hublot monoélément. Cependant, dès que l'on s'écarte de l'axe de symétrie de révolution, le hublot biélément présente une rupture de symétrie plus importante que le hublot monoélément, et par conséquent les aberrations et les défauts de chromatisme sont plus difficiles à corriger avec le hublot biélément qu'avec le hublot monoélément. Un exemple numérique ultérieur permettra de comparer les écarts aberrants trouvés précédemment pour le hublot monoélément avec les écarts aberrants existant pour un exemple de hublot biélément.

La figure 3 représente schématiquement la vue en coupe d'un exemple d'équipement optique selon l'invention comportant un hublot biélément. Pour des raisons de clarté de la figure 3, aucune hachure n'est représentée. La différence essentielle avec le cas de la figure 2 précédemment décrite représentant un équipement optique selon l'invention comportant un hublot monoélément réside dans la constitution du hublot lui-même. Le hublot H afocal biélément est constitué d'un premier ménisque divergent 10 ayant une surface extérieure 1 qui est sphérique et une surface intérieure 2. La surface intérieure 2 peut être par exemple sphérique concentrique avec la surface extérieure 1, ce qui permet l'utilisation comme premier ménisque 10 d'un hublot classique traditionnel. Le hublot H comporte également un deuxième ménisque 30 ayant un dioptre externe 3 et un dioptre interne 4 qui est la surface intérieure du hublot H. Une lame d'air 20 ou une couche de colle 20 sépare généralement les deux ménisques 10 divergent et 30 convergent. Le reste de l'équipement optique est semblable à celui décrit au niveau de la figure 2.

Considérons un exemple numérique d'un hublot biélément permettant de comparer les écarts aberrants obtenus avec ceux obtenus précédemment pour le hublot monoélément. Le rayon de courbure $R_1$ est choisi égal à 200mm. Le rayon de courbure $R_2$ est choisi valant 165mm car c'est cette valeur qui donne sensiblement les meilleurs résultats, c'est-à-dire les écarts aberrants les plus faibles. L'épaisseur de chaque hublot est choisie égale à 10mm. Deux valeurs différentes d'espace interménisque ei sont considérées, à savoir ei=30mm et ei=40mm. L'espace interménisque ei est aussi l'épaisseur de la lame d'air 20 ou de la couche de colle 20. Les rayons de courbure $R_3$ et $R_4$ respectivement des dioptres 3 et 4 du deuxième ménisque 30 sont donnés dans les tableaux suivants avec les écarts aberrants $\Delta$. Le même matériau constitue chacun des deux ménisques 10 et 30. Un premier tableau est donné pour le saphir ayant un indice valant N=1,7 :

| ei | 30mm | 40mm |
|---|---|---|
| $R_3$ | 1410mm | 437mm |
| $R_4$ | -4400mm | 733mm |
| $\Delta$ | 6,8$\mu$m | 7,7$\mu$m |

Les écarts aberrants $\Delta$=6,8$\mu$m et $\Delta$=7,7$\mu$m

pour le hublot biélément sont à comparer avec l'écart aberrant obtenu précédemment pour le hublot monoélément avec une épaisseur de hublot valant 10mm, à savoir Δ=5,2μm. L'écart aberrant obtenu pour le hublot monoélément est plus faible que celui obtenu pour le hublot biélément, ce qui rend le hublot monoélément plus intéressant sous ce rapport.

Un deuxième tableau est donné pour le ZnS ayant un indice valant N=2,2 :

| $e_i$ | 30mm | 40mm |
|---|---|---|
| $R_3$ | 557mm | 269mm |
| $R_4$ | 1100mm | 347mm |
| $\Delta$ | 10,3μm | 13,8μm |

Les écarts aberrants Δ=10,3μm et Δ=13,8μm pour le hublot biélément sont à comparer avec l'écart aberrant obtenu précédemment pour le hublot monoélément avec une épaisseur de hublot valant 10mm, à savoir Δ=6,9μm. L'écart aberrant obtenu pour le hublot monoélément est plus faible que celui obtenu pour le hublot biélément, ce qui rend le hublot monoélément plus intéressant sous ce rapport.

Dans le cas du hublot biélément, l'intérieur des deux ménisques 10 et 30 du hublot est de préférence constitué par le même matériau pour les deux ménisques 10 et 30. Ainsi, la correction du chromatisme, notamment lorsque l'équipement optique selon l'invention fonctionne dans un domaine spectral qui est multibande, est facilitée. La dérive, en fonction de la température, de l'indice du matériau constitutif du hublot afocal de grossissement proche de 1, se compense d'elle-même, ce qui n'est pas le cas lorsque les deux ménisques 10 et 30 sont constitués par des matériaux différents.

Aussi bien dans le cas du hublot monoélément que dans le cas du hublot biélément, de manière optionnelle le dioptre le plus extérieur du ménisque le plus extérieur du hublot est revêtu d'une couche mince faisant quelques micromètres de DLC (pour diamond light carbone en terminologie anglo-saxonne) ou de phosphate de bore, afin de rendre le hublot plus résistant à l'érosion.

Le domaine spectral de sensibilité de l'équipement optique comprend de préférence une partie du domaine spectral visible et/ou une partie du domaine spectral proche infrarouge. Ce domaine spectral de sensibilité est par exemple constitué de la bande visible ou de la bande proche infrarouge.

L'équipement optique est de préférence un système de reconnaissance terrestre de longue portée. L'équipement optique est alors intégré à un aéronef dont la mission est par exemple de recueillir des images sur le paysage terrestre d'un pays voisin tout en ne volant pas dans l'espace aérien dudit pays voisin. Ce type de système a en effet une résolution très élevée qui le rend particulièrement sensible aux turbulences de l'écoulement aérodynamique au niveau du hublot. En conditions opérationnelles, l'équipement optique est monté sur un aéronef ou intégré à un aéronef. L'aéronef est de préférence rapide, c'est-à-dire que sa vitesse en vol est comparable à celle d'un avion, par opposition aux aéronefs lents du type hélicoptère.

**Revendications**

1. Equipement optique destiné à être aéroporté comportant un sous-ensemble optique (80) ayant une ligne de visée (LDV), protégé par un capot suiveur (50) mobile et par un hublot (H) solidaire du capot suiveur (50) et fixe par rapport au capot suiveur (50), **caractérisé en ce que** la surface extérieure (1) du hublot (H) est sphérique, **en ce que** la ligne de visée (LDV) du sous-ensemble optique (80) passe par le centre de courbure (C) de la surface extérieure (1) du hublot (H), et **en ce que** la surface extérieure (1) du hublot (H) présente avec la surface extérieure (51) du capot suiveur (50) une continuité de forme, et **en ce que** le hublot (H) comporte un ou plusieurs dioptres internes (2, 3, 4) fixes par rapport à la surface extérieure (1) du hublot (H), ledit ou lesdits dioptres internes (2, 3, 4) rendant le hublot (H) afocal.

2. Equipement optique selon la revendication 1, **caractérisé en ce qu'**il comporte une structure porteuse (60), le sous-ensemble optique (80) étant à la fois suspendu à la structure porteuse (60) et mécaniquement isolé de la structure porteuse (60) par une suspension antivibratoire (70) filtrant les contraintes mécaniques, la ligne de visée (LDV) du sous-ensemble optique (80) passant par le centre de courbure (C) de la surface extérieure (1) du hublot (H) en l'absence de contraintes mécaniques exercées sur la structure porteuse (60), le capot suiveur (50) étant mobile par rapport à la structure porteuse (60), et **en ce qu'**il comporte une enveloppe extérieure (50, H) protégeant le sous-ensemble optique (80) de l'environnement extérieur, l'enveloppe extérieure (50, H) comportant le capot suiveur (50) et le hublot (H) lequel permet une communication optique dans un domaine spectral donné entre le sous-ensemble optique (80) et l'extérieur.

3. Equipement optique selon l'une quelconque des revendications précédentes, **caractérisé en ce que** le grossissement (G) du hublot (H) afocal est compris entre 0,95 et 1.

4. Equipement optique selon l'une quelconque des revendications précédentes, **caractérisé en ce que** l'équipement optique comporte au moins deux voies optiques ayant des pupilles d'entrée séparées, et **en ce que** les deux voies optiques passent soit à travers le même hublot (H) soit à travers deux hublots (H) distincts mais de même grossissement (G).

5. Equipement optique selon l'une quelconque des revendications précédentes, **caractérisé en ce que** le hublot (H) présente un axe de révolution (ar), **en ce que** le sous-ensemble optique (80) comporte un dispositif d'imagerie et des moyens de correction électronique des images compensant l'écart entre l'axe de révolution (ar) du hublot (H) et la ligne de visée (LDV) du sous-ensemble optique (80).

6. Equipement optique selon l'une quelconque des revendications précédentes, **caractérisé en ce que** le hublot (H) est constitué d'un seul ménisque (10).

7. Equipement optique selon la revendication 6, **caractérisé en ce que** la surface intérieure (2) du ménisque (10) consiste en un dioptre qui est d'une part sphérique non concentrique avec la surface extérieure (1) du hublot (H) et d'autre part diffractif.

8. Equipement optique selon l'une quelconque des revendications 6 à 7, **caractérisé en ce que**, $R_2$ étant le rayon de courbure du dioptre le plus interne (2) du hublot (H), $R_1$ étant le rayon de courbure de la surface extérieure (1) du hublot (H), e étant l'épaisseur du hublot (H) au niveau de son centre, N étant l'indice du matériau constituant ledit ménisque (10), la relation suivante est sensiblement vérifiée :

$$R_2 = R_1 - e + \frac{e}{N}.$$

9. Equipement optique selon l'une quelconque des revendications 1 à 5, **caractérisé en ce que** le hublot (H) est constitué d'un ménisque divergent (10) disposé vers l'extérieur du hublot (H) et d'un ménisque convergent (30) disposé vers l'intérieur du hublot (H), les deux ménisques (10 et 30) étant séparés par une lame d'air (20) ou par une couche de colle (20).

10. Equipement optique selon la revendication 9, **caractérisé en ce que** le matériau constituant l'intérieur des deux ménisques (10 et 30) du hublot (H) est le même.

11. Equipement optique selon l'une quelconque des revendications 6 à 10, **caractérisé en ce que** le matériau constituant l'intérieur du ou des ménisques (10, 30) est du saphir ayant un indice valant sensiblement N=1,7 ou du ZnS ayant un indice valant sensiblement N=2,2 ou du Silicium ayant un indice valant sensiblement N=3,4.

12. Equipement optique selon l'une quelconque des revendications 6 à 11, **caractérisé en ce que** le dioptre le plus extérieur (1) du ménisque le plus extérieur (10) du hublot (H) est revêtu d'une couche mince faisant quelques micromètres de DLC ou de phosphate de bore.

13. Equipement optique selon l'une quelconque des revendication précédentes, **caractérisé en ce que** le domaine spectral donné comprend une partie du domaine spectral visible et/ou une partie du domaine spectral proche infrarouge.

14. Equipement optique selon l'une quelconque des revendications précédentes, **caractérisé en ce que** le capot suiveur (50) a une forme sphérique.

15. Equipement optique selon l'une quelconque des revendications précédentes, **caractérisé en ce que** l'équipement optique est un système de reconnaissance terrestre de longue portée.

16. Aéronef rapide **caractérisé en ce qu'**il comporte un équipement optique selon l'une quelconque des revendications précédentes.

**Claims**

1. Optical equipment intended to be airborne, comprising an optical subassembly (80) having a line of sight (LOS), protected by a moveable follower cap (50) and by a window (W) integral with the follower cap (50) and fixed relative to the follower cap (50), **characterized in that** the outer surface (1) of the window (W) is spherical, **in that** the line of sight (LOS) of the optical subassembly (80) passes through the centre of curvature (C) of the outer surface (1) of the window (W), **in that** the outer surface (1) of the window (W) forms a continuous shape with the outer surface (51) of the follower cap (50), and **in that** the window (W) comprises one or more internal refractive interfaces (2, 3, 4) fixed relative to the outer surface (1) of the window (W), said internal refractive interface or interfaces (2, 3, 4) making the window (W) afocal.

2. Optical equipment according to Claim 1, **characterized in that** it includes a carrier structure (60), the optical subassembly (80) being both suspended from the carrier structure (60) and mechanically isolated from the carrier structure (60) by an antivibration suspension (70) that filters out the mechanical stresses, the line of sight (LOS) of the optical subassembly (80) passing through the centre of curvature (C) of the outer surface (1) of the window (W) in the absence of mechanical stresses exerted on the carrier structure (60), the follower cap (50) being moveable relative to the carrier structure (60), and **in that** it includes an outer envelope (50, W) protecting the optical subassembly (80) from the outside environment, the outer envelope (50, W) comprising the follower cap (50) and the window (W), which allows optical communication between the optical subassembly (80) and the outside within a given spectral range.

3. Optical equipment according to either of the preceding claims, **characterized in that** the magnification (M) of the afocal window (W) is between 0.95 and 1.

4. Optical equipment according to any one of the preceding claims, **characterized in that** the optical equipment includes at least two optical channels having separate entrance pupils and **in that** the two optical channels pass either through the same window (W) or through two separate windows (W), but these having the same magnification (M).

5. Optical equipment according to any one of the preceding claims, **characterized in that** the window (W) has an axis of revolution (ar) and **in that** the optical subassembly (80) includes an imaging device and means for electronically correcting the images by compensating for the difference between the axis of revolution (ar) of the window (W) and the line of sight (LOS) of the optical subassembly (80).

6. Optical equipment according to any one of the preceding claims, **characterized in that** the window (W) consists of a single meniscus (10).

7. Optical equipment according to Claim 6, **characterized in that** the inner surface (2) of the meniscus (10) consists of a refractive interface which is, on the one hand, spherical and non-concentric with the outer surface (1) of the window (W) and, on the other hand, diffractive.

8. Optical equipment according to either of Claims 6 and 7, **characterized in that** if the radius of curvature of the innermost refractive interface (2) of the window (W) is $R_2$, the radius of curvature of the outer surface (1) of the window (W) is $R_1$, the thickness of the window (W) at its centre is e and the index of the material constituting said meniscus (10) is N, then the following equation is substantially satisfied:

$$R_2 = R_1 - e + \frac{e}{N}.$$

9. Optical equipment according to any one of Claims 1 to 5, **characterized in that** the window (W) consists of a divergent meniscus (10) lying to the outside of the window (W) and of a convergent meniscus (30) lying to the inside of the window (W), the two menisci (10 and 30) being separated by an air layer (20) or by a cement layer (20).

10. Optical equipment according to Claim 9, **characterized in that** the material constituting the inside of the two menisci (10 and 30) of the window (W) is the same.

11. Optical equipment according to any one Claims 6 to 10, **characterized in that** the material constituting the inside of the meniscus or menisci (10, 30) is sapphire having an index N substantially equal to 1.7 or ZnS having an index N substantially equal to 2.2 or silicon having an index N substantially equal to 3.4.

12. Optical equipment according to any one of Claims 6 to 11, **characterized in that** the outermost refractive interface (1) of the outermost meniscus (10) of the window (H) is coated with a thin film of DLC or boron phosphate having a thickness of a few microns.

13. Optical equipment according to any one of the preceding claims, **characterized in that** the given spectral range comprises part of the visible spectral range and/or part of the near-infrared spectral range.

14. Optical equipment according to any one of the preceding claims, **characterized in that** the follower cap (50) has a spherical shape.

15. Optical equipment according to any one of the preceding claims, **characterized in that** the optical equipment is a long-range terrestrial reconnaissance system.

16. High-speed aircraft, **characterized in that** it includes optical equipment according to any one of the preceding claims.

**Patentansprüche**

1. Optische Einrichtung für Flugkörper, die eine optische Untereinheit (80) mit einer Visierlinie (LDV) aufweist, geschützt durch eine bewegliche Nachführhaube (50) und durch ein fest mit der Nachführhaube (50) verbundenes und bezüglich der Nachführhaube (50) ortsfestes Fenster (H), **dadurch gekennzeichnet, dass** die Außenfläche (1) des Fenster (H) sphärisch ist, dass die Visierlinie (LDV) der optischen Untereinheit (80) durch das Krümmungszentrum (C) der Außenfläche (1) des Fensters (H) verläuft, und dass die Außenfläche (1) des Fensters (H) mit der Außenfläche (51) der Nachführhaube (50) eine Formkontinuität aufweist, und dass das Fenster (H) ein oder mehrere innere Diopter (2, 3, 4) aufweist, die bezüglich der Außenfläche (1) des Fensters (H) ortsfest sind, wobei das oder die inneren Diopter (2, 3, 4) das Fenster (H) afokal machen.

2. Optische Einrichtung nach Anspruch 1, **dadurch ge-**

kennzeichnet, dass sie eine Trägerstruktur (60) aufweist, wobei die optische Untereinheit (80) sowohl an der Trägerstruktur (60) aufgehängt als auch durch eine die mechanischen Beanspruchungen filternde, vibrationshemmende Aufhängung (70) mechanisch von der Trägerstruktur (60) isoliert ist, wobei die Visierlinie (LDV) der optischen Untereinheit (80) in Abwesenheit von auf die Trägerstruktur (60) ausgeübten mechanischen Beanspruchungen durch das Krümmungszentrum (C) der Außenfläche (1) des Fensters (H) verläuft, wobei die Nachführhaube (50) bezüglich der Trägerstruktur (60) beweglich ist, und dass sie eine Außenhülle (50, H) aufweist, die die optische Untereinheit (80) vor der Außenumgebung schützt, wobei die Außenhülle (50, H) die Nachführhaube (50) und das Fenster (H) aufweist, das eine optische Verbindung in einem gegebenen Spektralbereich zwischen der optischen Untereinheit (80) und der Außenumgebung erlaubt.

3. Optische Einrichtung nach einem der vorhergehenden Ansprüche, **dadurch gekennzeichnet, dass** die Vergrößerung (G) des afokalen Fensters (H) zwischen 0,95 und 1 liegt.

4. Optische Einrichtung nach einem der vorhergehenden Ansprüche, **dadurch gekennzeichnet, dass** sie mindestens zwei optische Pfade aufweist, die getrennte Eingangspupillen haben, und dass die zwei optischen Pfade entweder durch das gleiche Fenster (H) oder durch zwei getrennte, aber die gleiche Vergrößerung (G) aufweisende Fenster (H) gehen.

5. Optische Einrichtung nach einem der vorhergehenden Ansprüche, **dadurch gekennzeichnet, dass** das Fenster (H) eine Drehsymmetrieachse (ar) aufweist, dass die optische Untereinheit (80) eine Bilderzeugungsvorrichtung und elektrische Korrekturmittel der Bilder aufweist, die die Abweichung zwischen der Drehsymmetrieachse (ar) des Fensters (H) und der Visierlinie (LDV) der optischen Untereinheit (80) kompensieren.

6. Optische Einrichtung nach einem der vorhergehenden Ansprüche, **dadurch gekennzeichnet, dass** das Fenster (H) aus einem einzigen Meniskus (10) besteht.

7. Optische Einrichtung nach Anspruch 6, **dadurch gekennzeichnet, dass** die Innenfläche (2) des Meniskus (10) aus einem Diopter besteht, das einerseits sphärisch und nicht konzentrisch mit der Außenfläche (1) des Fensters (H) und andererseits diffraktiv ist.

8. Optische Einrichtung nach einem der Ansprüche 6 bis 7, **dadurch gekennzeichnet, dass**, wenn $R_2$ der Krümmungsradius des am weitesten innen liegenden Diopters (2) des Fensters (H), $R_1$ der Krümmungsradius der Außenfläche (1) des Fensters (H), e die Dicke des Fensters (H) in Höhe seiner Mitte, N der Index des den Meniskus (10) bildenden Werkstoffs ist, die folgende Beziehung im Wesentlichen erfüllt ist: $R_2 = R_1 - e + \dfrac{e}{N}$.

9. Optische Einrichtung nach einem der Ansprüche 1 bis 5, **dadurch gekennzeichnet, dass** das Fenster (H) aus einem divergierenden Meniskus (10), der zur Außenseite des Fensters (H) angeordnet ist, und aus einem konvergierenden Meniskus (30) besteht, der zur Innenseite des Fensters (H) angeordnet ist, wobei die zwei Menisken (10 und 30) durch einen Luftzwischenraum (20) oder durch eine Kleberschicht getrennt sind.

10. Optische Einrichtung nach Anspruch 9, **dadurch gekennzeichnet, dass** der das Innere der zwei Menisken (10 und 30) des Fensters (H) bildende Werkstoff der gleiche ist.

11. Optische Einrichtung nach einem der Ansprüche 6 bis 10, **dadurch gekennzeichnet, dass** der das Innere des oder der Menisken (10, 30) bildende Werkstoff ein Saphir mit einem Index, der im Wesentlichen N = 1,7 beträgt, oder ZnS mit einem Index von im Wesentlichen N = 2,2 oder Silicium mit einem Index von im Wesentlichen N = 3,4 ist.

12. Optische Einrichtung nach einem der Ansprüche 6 bis 11, **dadurch gekennzeichnet, dass** das am weitesten außen liegende Diopter (1) des am weitesten außen liegenden Meniskus (10) des Fensters (H) mit einer dünnen Schicht bedeckt ist, die einige Mikrometer von DLC oder von Borphosphat bildet.

13. Optische Einrichtung nach einem der vorhergehenden Ansprüche, **dadurch gekennzeichnet, dass** der gegebene Spektralbereich einen Teil des sichtbaren Spektralbereichs und/oder einen Teil des Spektralbereichs im nahen Infrarot enthält.

14. Optische Einrichtung nach einem der vorhergehenden Ansprüche, **dadurch gekennzeichnet, dass** die Nachführhaube (50) eine sphärische Form hat.

15. Optische Einrichtung nach einem der vorhergehenden Ansprüche, **dadurch gekennzeichnet, dass** sie ein Erderkundungssystem mit großer Reichweite ist.

16. Schnelles Luftfahrzeug, **dadurch gekennzeichnet, dass** es eine optische Einrichtung nach einem der vorhergehenden Ansprüche aufweist.

FIG.1

FIG.2

FIG.3